# FASCICULE DE BREVET EUROPEEN

(11) **EP 2 545 449 B1**
(45) Date de publication et mention de la délivrance du brevet: **12.08.2020**
(21) Numéro de dépôt: 11712987.4
(22) Date de dépôt: 10.03.2011
(51) Int. Cl.: G06F 9/48, G06F 9/455, G06F 9/38

(54) **PROCÉDÉ DE CONFIGURATION D'UN SYSTÈME INFORMATIQUE, PROGRAMME D'ORDINATEUR ET SYSTÈME INFORMATIQUE CORRESPONDANTS**
VERFAHREN ZUM KONFIGURIEREN EINES IT-SYSTEMS, ZUGEHÖRIGES COMPUTERPROGRAMM UND IT-SYSTEM
METHOD FOR CONFIGURING AN IT SYSTEM, CORRESPONDING COMPUTER PROGRAM AND IT SYSTEM

(30) Priorité: 11.03.2010 FR 1051758
(43) Date de publication de la demande: 16.01.2013
(73) Titulaire: Bull S.A.S., 78340 Les Clayes-sous-Bois (FR)
(72) Inventeur: BRU, Xavier, F-38640 Claix (FR); GARRIGUES, Philippe, F-38330 Montbonnot Saint-Martin (FR); WELTERLEN, Benoît, F-38000 Grenoble (FR)
(74) Mandataire: Bonnet, Michel
(86) Numéro de dépôt international: PCT/FR2011/050489
(87) Numéro de publication internationale: WO 2011/110790

(56) Documents cités:
- EP-A1- 1 890 225
- US-A1- 2004 215 939
- CHULHO SHIN ET AL: "Dynamic scheduling issues in SMT architectures", PARALLEL AND DISTRIBUTED PROCESSING SYMPOSIUM, 2003. PROCEEDINGS. INTE RNATIONAL APRIL 22-26, 2003, PISCATAWAY, NJ, USA,IEEE, 22 avril 2003 (2003-04-22), pages 77-84, XP010645608, ISBN: 978-0-7695-1926-5

## Description

La présente invention concerne un procédé de configuration d'un système informatique, un programme d'ordinateur et un système informatique correspondants.

L'invention s'applique plus particulièrement à un système informatique comportant au moins un processeur comprenant lui-même au moins un coeur de calcul mettant en oeuvre une technologie d'exécution simultanée de plusieurs fils d'instructions, dite technologie SMT (de l'anglais « Simultaneous Multi Threading »), par exemple la technologie d' « hyper threading » (marque déposée) de la société Intel.

La terminologie suivante est utilisée dans la présente description, ainsi que dans les revendications.

Un « système informatique » est un système conçu pour exécuter des instructions de programme d'ordinateur et comportant pour cela au moins une unité de traitement centrale, appelée également processeur ou CPU (de l'anglais « Central Processing Unit »). Dans un ordre de complexité croissante, un système informatique selon l'invention peut être constitué d'un simple micro-ordinateur comportant un ou plusieurs microprocesseurs à un ou plusieurs coeurs de calcul, ou d'un ensemble plus complexe dans lequel plusieurs micro-ordinateurs sont interconnectés via un réseau de transmission de données. La complexité d'un système informatique dans lequel l'invention peut être mise en oeuvre dépend principalement de l'application visée.

Un « microprocesseur » est un processeur implémenté sur un nombre très restreint de circuits intégrés, généralement un seul. La popularité des microprocesseurs fait qu'ils sont généralement appelés simplement processeur ou CPU.

On notera qu'un processeur peut comporter un ou plusieurs cœurs de calcul. Un « processeur mono coeur » est alors un processeur (microprocesseur) comprenant un seul coeur de calcul, et un « processeur multi cœurs » est un processeur (microprocesseur) comprenant plusieurs coeurs de calcul qui partagent certains éléments en commun, généralement une mémoire cache, par exemple la mémoire cache dite de niveau 2 (cache L2).

Un coeur de calcul est la partie du processeur (microprocesseur) réalisant les calculs correspondants aux instructions exécutées. Un coeur de calcul comprend généralement une ou plusieurs unités de contrôle ainsi qu'une ou plusieurs unités de calcul entier et une ou plusieurs unités de calcul flottant.

Un « programme d'ordinateur », ou plus simplement « programme » est un ensemble d'instructions destinées à être exécutées par un processeur.

Un « processus » est un programme en cours d'exécution. Un processus peut ne comporter qu'un seul fil d'instructions (le processus est alors parfois qualifié de « processus lourd »), ou bien comporter plusieurs fils d'instructions (qualifiés parfois de « processus légers ») partageant des ressources communes, généralement de la mémoire, et pouvant s'exécuter de manière asynchrone.

Un « fil d'instructions » (« thread » en anglais) est une suite d'instructions qu'un coeur de calcul exécute les unes après les autres.

Un « BIOS » (de l'anglais « Basic Input Output System ») est un programme lancé au début du démarrage d'un système informatique, avant le lancement du système d'exploitation.

Un « système d'exploitation » est un programme s'exécutant sur un système informatique et réalisant l'interface entre le système informatique et d'autres programmes s'exécutant sur ce système informatique, généralement des « programmes applicatifs », c'est-à-dire des programmes destinés à être contrôlés par un utilisateur et généralement destinés à être lancés par ce dernier.

Un « démon » est un processus destiné à être exécuté en arrière plan, c'est-à-dire qui n'est pas sous contrôle direct de l'utilisateur. Les démons sont souvent lancés par le système d'exploitation.

Par opposition aux démons, un « processus applicatif » est un programme applicatif en cours d'exécution.

Un « shell » est un programme fournissant une interface à l'utilisateur pour accéder à des services offerts par le système d'exploitation.

Un « script » est un programme interprété, c'est-à-dire comprenant des instructions interprétées par un autre programme qui les convertit en instructions pour le processeur.

Un « shell-script » est donc un script comportant des instructions destinées à être interprétées par un shell.

Par ailleurs, un « processeur logique » est un processeur vu par le système d'exploitation. Ainsi, un processeur physiquement présent apparaît sous la forme d'un ou plusieurs processeurs logiques au système d'exploitation suivant son architecture et/ou sa configuration. En particulier, un processeur mono coeur en mode mono threading apte à traiter un seul fil d'instruction à la fois apparaît comme un seul processeur logique, et un processeur multi coeurs où chaque cœur est apte à traiter un seul fil d'instructions à la fois apparaît comme autant de processeurs logiques que de coeurs.

Il existe actuellement des processeurs, mono cœur ou multi coeurs, dans lesquels chaque cœur de calcul met en oeuvre une technologie SMT afin d'être apte à exécuter de manière entrelacée au moins deux fils d'instructions à la fois.

Par exemple, la société Intel commercialise des processeurs capables de fonctionner de manière sélective en mode « hyper threading » dans lequel chaque coeur de calcul est apte à exécuter de manière entrelacée deux fils d'instructions à la fois, ou bien en mode « mono threading » dans lequel chaque coeur de calcul est apte à exécuter un seul fil d'instructions à la fois.

Par ailleurs, la plupart des systèmes d'exploitation modernes sont conçus pour gérer plusieurs processeurs logiques et sont donc aptes à fournir des fils d'instructions à chaque coeur de calcul physiquement présent.

Afin de permettre à un tel système d'exploitation de profiter du mode hyper threading sans nécessiter de le modifier, il est prévu que chaque coeur en mode hyper threading apparaisse sous la forme de deux processeurs logiques au système d'exploitation. Ce dernier peut donc fournir deux processus à chaque cœur de calcul en mode hyper threading en utilisant ses mécanismes habituels de gestion des processeurs logiques.

Le document US2004/0215939 propose un mécanisme de configuration d'un système informatique comportant au moins un cœur de calcul pour exécuter des fils d'instructions, chaque cœur de calcul étant apte à exécuter de manière entrelacée au moins deux fils d'instructions à la fois, et un système d'exploitation apte à fournir des fils d'instructions à chaque cœur de calcul en fonction de ses capacités.

Certains programmes sont conçus pour tirer parti du mode hyper threading : c'est le cas en particulier des programmes produisant, lors de leur exécution, un processus multi programmé comprenant deux fils d'instructions qui utilisent des ressources différentes d'un cœur de calcul.

Il a été observé que certains programmes ont des performances optimales dans un mode, mais dégradées dans l'autre mode.

Ainsi, il serait souhaitable d'adapter le mode de fonctionnement - mono threading ou hyper threading ou plus généralement SMT - des cœurs de calcul de processeurs suivant le type de programme que l'on souhaite exécuter.

Or, à présent, le seul moyen connu pour passer d'un mode à l'autre est de modifier un paramètre du BIOS. Ceci nécessite un premier redémarrage du système informatique afin d'accéder au BIOS pour le configurer, et un second redémarrage pour que le BIOS ainsi configuré s'exécute. Il existe bien des outils informatiques permettant de faire la modification des paramètres du BIOS sous contrôle du système informatique. Cependant, le second redémarrage du système reste nécessaire. Ainsi, ces solutions impliquent une perte de temps importante et sont en pratique trop lourdes pour être utilisables.

Il peut ainsi être souhaité de prévoir un procédé de configuration d'un système informatique qui permette de s'affranchir d'au moins une partie des problèmes et contraintes précités.

Ainsi, un objet de l'invention est un procédé de configuration d'un système informatique comportant au moins un cœur de calcul pour exécuter des fils d'instructions tel que décrit dans la revendication 1.

Grâce à l'invention, il est possible d'imposer dynamiquement que chaque cœur de calcul ne traite à la fois qu'un seul fil d'instructions, malgré sa configuration en mode hyper threading, ou plus généralement en mode SMT. Il est ainsi possible de passer dynamiquement du mode SMT au mode dans lequel chaque cœur ne traite au plus qu'un fil d'instruction à la fois, sous contrôle direct du système d'exploitation, sans qu'un redémarrage ne soit nécessaire. Le système informatique peut ainsi exécuter, sur des cœurs de calcul en mode SMT et avec de bonnes performances, un programme ayant normalement des performances optimales lorsqu'il est exécuté sur des cœurs de calcul en mode mono threading. L'invention est particulièrement efficace avec des cœurs de calcul ayant des capacités sensiblement identiques en mode mono threading et en mode SMT avec un seul fil d'instructions en cours d'exécution.

De façon optionnelle, le procédé comporte en outre, alors que le système d'exploitation en cours d'exécution est configuré dans le mode, dit premier mode, dans lequel il fournit à chaque cœur de calcul au plus un fil d'instructions à la fois, une étape de configuration du système d'exploitation en cours d'exécution dans un second mode, différent du premier mode, dans lequel il peut fournir à chaque cœur de calcul plus d'un fil d'instructions à la fois.

Ainsi, il est possible d'exécuter à nouveau de manière efficace un programme ayant normalement des performances optimales lorsqu'il est exécuté sur des cœurs de calcul en mode SMT.

De façon optionnelle également, chaque cœur de calcul est conçu pour présenter au système d'exploitation en cours d'exécution autant de processeurs logiques que de fils d'instructions qu'il peut exécuter de manière entrelacée à la fois, le système d'exploitation en cours d'exécution comporte une liste des processeurs logiques disponibles pour l'ordonnancement des fils d'instructions dans laquelle se trouvent tous les processeurs logiques présentés par chaque cœur de calcul, et le procédé comporte en outre, pour configurer le système d'exploitation en cours d'exécution afin qu'il fournisse à chaque cœur de calcul au plus un fil d'instructions à la fois, une étape de transmission, au système d'exploitation en cours d'exécution, d'une instruction de retirer de la liste des processeurs logiques disponibles pour l'ordonnancement, tous les processeurs logiques sauf un de chaque cœur de calcul.

Ainsi, le système d'exploitation est très simplement configuré pour ne fournir qu'au plus un fil d'instructions à chaque cœur de calcul.

De façon optionnelle également, le procédé comporte en outre, pour configurer le système d'exploitation en cours d'exécution afin qu'il fournisse à chaque cœur de calcul plus d'un fil d'instructions à la fois, une étape de transmission, au système d'exploitation en cours d'exécution, d'une instruction d'ajouter dans la liste des processeurs logiques disponibles pour l'ordonnancement, tous les processeurs logiques qui en ont été retirés.

Ainsi, le système d'exploitation est très simplement configuré pour pouvoir fournir plus d'un fil d'instructions à chaque cœur de calcul.

De façon optionnelle également, le système informatique ne comporte, comme cœur ou cœurs de calcul, qu'un ou des cœurs de calcul aptes à exécuter de manière entrelacée au moins deux fils d'instructions à la fois.

De façon optionnelle également, chaque cœur de calcul est apte à exécuter de manière entrelacée exactement deux fils d'instructions à la fois.

Ainsi, le procédé est adapté au cas particulier de l'hyper threading.

L'invention a également pour objet un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé de configuration selon l'invention, lorsque ledit programme est exécuté sur un ordinateur.

De façon optionnelle, le programme d'ordinateur est sous forme d'un shell-script.

De façon optionnelle également, le programme d'ordinateur est sous forme d'au moins une fonction d'une bibliothèque informatique destinée à être appelée par un autre programme.

L'invention a également pour objet un système informatique tel que dans la revendication indépendante .

L'invention sera mieux comprise à l'aide de la description qui va suivre, donnée uniquement à titre d'exemple et faite en se référant aux dessins annexés dans lesquels :
- la figure 1 représente schématiquement un système informatique selon un mode de réalisation de l'invention, et
- la figure 2 illustre les étapes successives d'un procédé de configuration du système informatique de la figure 1, selon un mode de réalisation de l'invention.

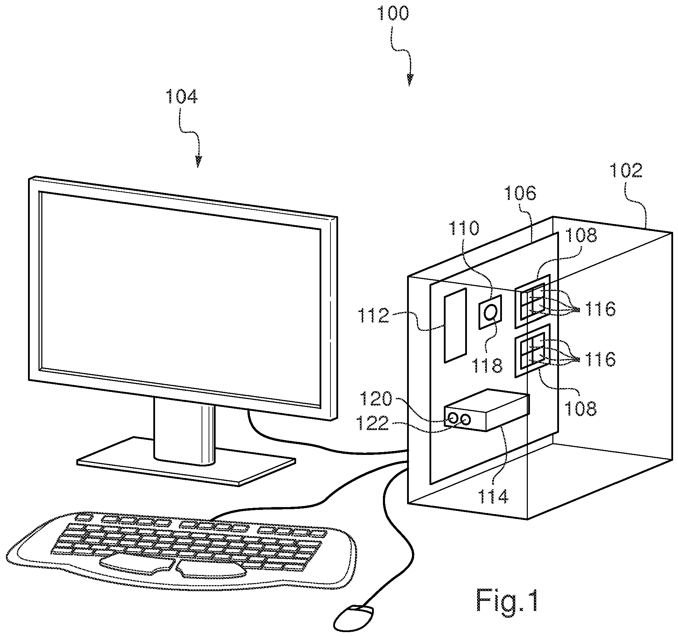

En référence à la figure 1, on a représenté un exemple de mise en oeuvre de l'invention, sous la forme d'un ordinateur 100.

L'ordinateur 100 comporte une unité centrale 102 et une interface homme/machine 104, par exemple un écran, un clavier et une souris.

L'unité centrale 102 comporte une carte mère 106 et, connectés à la carte mère 106, deux processeurs Xeon X5570 (marque déposée) 108, une mémoire de BIOS 110, une mémoire vive 112 et une mémoire de stockage 114, telle qu'un disque dur. Les processeurs 108 sont ainsi aptes à exécuter les instructions enregistrées dans la mémoire de BIOS 110 et la mémoire vive 112, et à lire ou écrire des données enregistrées dans la mémoire de stockage 114.

Dans l'exemple illustré sur la figure 1, chaque processeur 108 comporte quatre cœurs de calcul 116 pour exécuter des fils d'instructions. Chaque processeur 108 est apte à fonctionner sélectivement en mode mono threading, dans lequel chaque cœur de calcul 116 est apte à exécuter un seul fil d'instruction à la fois et apparaît, en particulier pour le système d'exploitation, sous la forme d'un seul processeur logique, ou bien en mode hyper threading, dans lequel chaque cœur de calcul 116 est apte à exécuter de manière entrelacée deux fils d'instructions à la fois et apparaît, en particulier pour le système d'exploitation, sous la forme de deux processeurs logiques.

Un BIOS 118 est enregistré dans la mémoire de BIOS 110. Le BIOS 118 peut être configuré, au moyen d'un paramètre de configuration prédéterminé, pour démarrer les processeurs 108 en mode mono threading ou bien en mode hyper threading. Dans ce dernier cas, le BIOS 118 est configuré pour démarrer deux processeurs logiques pour chaque cœur de calcul 116, appelés respectivement premier et second processeurs logiques. En mode mono threading, le BIOS 118 ne démarre que le premier processeur logique.

En outre, le BIOS 118 est conforme à la norme ACPI (de l'anglais « Advanced Configuration and Power Interface »). Cette norme spécifie en particulier que l'exécution du BIOS 118 doit créer une liste des processeurs logiques présents, c'est-à-dire ceux qui ont été démarrés. Cette liste est créée dans une table, appelée table MADT (de l'anglais « Multiple APIC Description Table ») enregistrée dans la mémoire vive 112 et destinée à être lue par le système d'exploitation lors de son exécution afin qu'il ait connaissance des processeurs logiques présents. La table MADT indique en outre, pour chaque processeur logique, si ce dernier correspond au cœur d'un processeur mono cœur, à l'un des cœurs d'un processeur multi cœurs, et/ou à l'un des cœurs logiques d'un cœur physique en mode hyper threading. Ainsi, la table MADT donne la configuration du ou des processeurs de l'ordinateur 100. Sur les processeurs Intel (marque déposée) récents, ces informations sont fournies par l'instruction « cpuid ».

La norme ACPI spécifie en outre que les seconds processeurs logiques de tous les cœurs de calcul 116 doivent être placés dans la liste après les premiers processeurs logiques de tous les cœurs de calcul 116. Ainsi, la liste comprend une première moitié regroupant les premiers processeurs logiques des cœurs de calcul 116, et une seconde moitié regroupant les seconds processeurs logiques des cœurs de calcul 116.

Un système d'exploitation 120 est enregistré dans la mémoire de stockage 114. Le système d'exploitation 120 est en particulier conçu pour fournir, lorsqu'il est exécuté par l'ordinateur 100, des fils d'instructions à chaque cœur de calcul 116. Dans l'exemple décrit, le système d'exploitation 120 est conforme au standard Unix (marque déposée). Il s'agit par exemple du système d'exploitation Linux (marque déposée).

Un shell-script 122, dont le code est produit en annexe, est également enregistré dans la mémoire de stockage 114. Le shell-script 122 est destiné à configurer le système d'exploitation 120 pour passer du mode hyper threading, ou plus généralement du mode SMT, à un mode « mono threading simulé », comme cela sera expliqué par la suite.

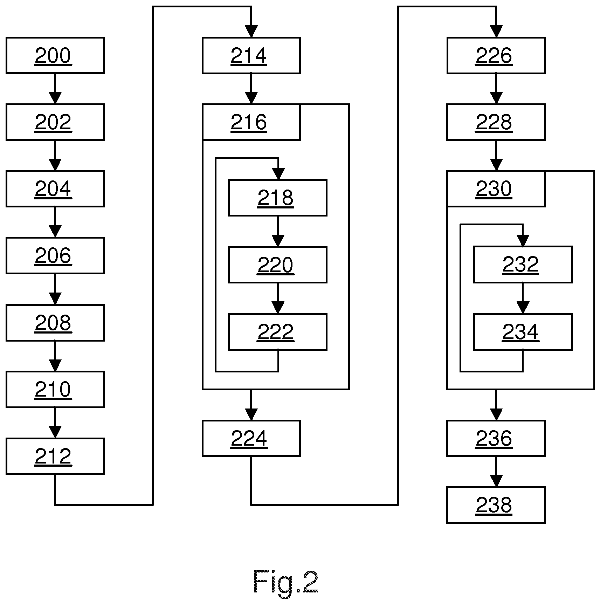

En référence à la figure 2, on va à présent décrire le fonctionnement de l'ordinateur 100. Par souci de simplicité, les programmes précités 118, 120 et 122 en cours d'exécution, qui sont alors des processus, porteront la référence du programme dont ils sont issus et seront désignés de la même façon, c'est-à-dire respectivement BIOS 118, système d'exploitation 120 et shell-script 122.

Au cours d'une étape 200, l'ordinateur 100 est mis sous tension.

Au cours d'une étape 202, le BIOS 118 est exécuté par l'ordinateur 100, le BIOS 118 étant configuré de manière à démarrer chaque cœur de calcul 116 en mode hyper threading.

Ainsi, au cours d'une étape 204, le BIOS 118 démarre deux processeurs logiques par cœur de calcul 116, de sorte que l'ordinateur 100 présente seize processeurs logiques dans l'exemple décrit.

Au cours d'une étape 206, le BIOS 118 crée, dans la table MADT, la liste des processeurs logiques présents, c'est-à-dire dans le cas présent des seize processeurs logiques démarrés.

Au cours d'une étape 208, le BIOS 118 lance le système d'exploitation 120.

Au cours d'une étape 210, le système d'exploitation 120 lit, dans la table MADT, la liste des processeurs logiques présents.

Au cours d'une étape 212, le système d'exploitation 120 place tous les processeurs logiques présents dans une liste de processeurs logiques disponibles pour l'ordonnancement («scheduling» en anglais), c'est-à-dire pour la répartition des fils d'instructions entre les processeurs de cette liste.

Par « liste des processeurs logiques disponibles pour l'ordonnancement », il faut comprendre n'importe quel ensemble de données indiquant, pour chaque processeur logique présent dans la liste MADT, si ce processeur logique doit être utilisé pour l'ordonnancement. Le format de cet ensemble de données n'est donc pas obligatoirement un format de structure de données en « liste ».

Suite à cette étape 212, l'ordinateur 100 est ainsi configuré par défaut en mode hyper threading, dans lequel le système d'exploitation 120 ordonnance les fils d'instructions entre tous les processeurs logiques présents, c'est-à-dire entre tous les processeurs logiques de tous les cœurs de calcul 116 des processeurs 108.

Les fils d'instructions proviennent par exemple de démons démarrés par le système d'exploitation 120 ou de programmes applicatifs démarrés par l'utilisateur au travers de l'interface homme/machine 104.

L'ordinateur 100 est en particulier apte à exécuter de manière optimale les programmes optimisés pour le mode hyper threading.

L'utilisateur souhaite alors par exemple lancer un programme, enregistré dans la mémoire de stockage 114, qui n'est pas optimisé pour le mode hyper threading, mais pour le mode mono threading.

Dans ce cas, au cours d'une étape 214, l'utilisateur lance le shell-script 122 au moyen de l'interface homme/machine 104 pour passer en mode dit « mono threading simulé ». Par exemple, cet utilisateur tape « ht off » en réponse à une invite de shell.

Au cours d'une étape 216, le shell-script 122 configure alors le système d'exploitation 120 en cours d'exécution afin qu'il fournisse à chaque cœur de calcul 116 au plus un fil d'instructions à la fois, malgré le fait que, de par leur configuration en mode hyper threading par le BIOS 118, les cœurs de calcul 116 peuvent exécuter deux fils d'instructions à la fois. C'est ce qui est appelé dans la présente description le mode « mono threading simulé ».

A cet effet, le shell-script 122 donne instruction au système d'exploitation 120 en cours d'exécution de retirer de la liste des processeurs logiques disponibles pour l'ordonnancement tous les processeurs logiques sauf un de chaque cœur de calcul 116.

Dans le cas présent, comme la norme ACPI spécifie que le premier processeur logique de chaque cœur de calcul 116 doit apparaître en premier dans la liste des processeurs présents, le shell-script 122 réalise l'étape 216 en donnant instruction au système d'exploitation 120 de retirer de la liste des processeurs logiques disponibles pour l'ordonnancement les processeurs logiques dont la position dans la liste des processeurs logiques présents est supérieure au nombre de cœurs de calcul 116 de l'ordinateur 100. Dans le cas de l'hyper threading, il s'agit des processeurs logiques positionnés dans la seconde moitié de la liste des processeurs logiques présents.

Dans l'exemple décrit, le shell-script 122 donne instruction de retirer de la liste des processeurs disponibles pour l'ordonnancement successivement chaque processeur de la seconde moitié de la liste de processeurs présents.

On remarquera que le shell-script 122 peut être utilisé pour un nombre quelconque de cœurs de calcul (et pas seulement huit comme dans l'exemple décrit), du moment que chacun de ces cœurs de calcul 116 est configuré à partir du BIOS 118 en mode hyper threading.

Le shell-script 122 donne instruction de retirer un processeur logique. Pour un système d'exploitation Linux, cela se fait en écrivant la valeur 0 dans le fichier propre au processeur numéroté X : /sys/devices/system/cpu/cpuX/online.

En réponse, le système d'exploitation 120 exécute, successivement pour chaque processeur logique devant être retiré de la liste des processeurs logiques disponibles pour l'ordonnancement, une suite d'étapes 218, 220 et 222.

Au cours de l'étape 218, le système d'exploitation 120 migre les interruptions et les processus exécutés par un processeur logique devant être retiré de la liste des processeurs logiques disponibles pour l'ordonnancement, vers d'autres processeurs logiques de cette liste.

Au cours de l'étape 220, le système d'exploitation 120 arrête les démons propres au processeur logique devant être retiré.

Au cours d'une étape 222, le système d'exploitation 120 retire ce processeur logique de la liste des processeurs disponibles pour l'ordonnancement, de sorte que plus aucun fil d'instructions ne lui est fourni par le système d'exploitation 120.

Lorsque les étapes 218, 220 et 222 ont été mises en oeuvre pour tous les processeurs logiques devant être retirés, l'ordinateur 100 est configuré en mode mono threading simulé, de sorte que le système d'exploitation 120 ordonnance tous les fils d'instructions sur les processeurs logiques de la première moitié de la liste de processeurs logiques présents, c'est-à-dire uniquement sur le premier processeur logique de chaque cœur de calcul 116. Ainsi, chaque cœur de calcul 116 n'exécute au plus qu'un seul fil d'instructions à la fois.

L'utilisateur peut ainsi lancer, au cours d'une étape 224, le programme optimisé pour le mode mono threading, qui s'exécute, au cours d'une étape 226, avec de bonnes performances, malgré la configuration des cœurs de calcul 116 en mode hyper threading.

Si maintenant l'utilisateur souhaite lancer un programme, par exemple enregistré dans la mémoire de stockage 114, qui n'est pas optimisé pour le mode mono threading mais pour le mode hyper threading, il lance, au cours d'une étape 228, le shell-script 122 au moyen de l'interface homme/machine 104 pour revenir en mode « hyper threading ». Par exemple, cet utilisateur tape « ht on » à une invite de shell.

Au cours d'une étape 230, le shell-script 122 configure alors le système d'exploitation 120 en cours d'exécution afin qu'il puisse fournir à chaque cœur de calcul 116 plus d'un fil d'instructions à la fois.

A cet effet, le shell-script 122 donne instruction au système d'exploitation 120 en cours d'exécution d'ajouter dans la liste des processeurs logiques disponibles tous les processeurs logiques ayant été retirés suite à l'étape 216.

Plus précisément, dans l'exemple décrit, le shell-script 122 donne instruction d'ajouter successivement chaque processeur logique apparaissant dans la seconde partie de la liste de processeurs logiques présents.

Dans l'exemple décrit, le shell-script 122 donne instruction d'ajouter un processeur logique. Pour un système d'exploitation Linux, cela se fait en écrivant la valeur 1 dans le fichier propre au processeur numéroté X : /sys/devices/system/cpu/cpuX/online.

En réponse, le système d'exploitation 120 exécute, successivement pour chaque processeur logique devant être ajouté à la liste des processeurs disponibles pour l'ordonnancement, une suite d'étapes 232 et 234.

Au cours de l'étape 232, le système d'exploitation 120 ajoute un processeur logique ayant été retiré suite à l'étape 216 à la liste des processeurs disponibles pour l'ordonnancement.

Au cours de l'étape 234, le système d'exploitation 120 démarre les démons propres au processeur logique ajouté à l'étape précédente.

Lorsque les étapes 232 et 234 ont été mises en oeuvre pour tous les processeurs logiques devant être ajoutés, l'ordinateur 100 est configuré en mode hyper threading, de sorte que le système d'exploitation 120 ordonnance les nouveaux fils d'instructions entre tous les processeurs logiques de tous les cœurs de calcul 116 des processeurs 108.

L'utilisateur peut ainsi lancer, au cours d'une étape 236, le programme optimisé pour le mode hyper threading, qui s'exécutera, au cours d'une étape 238, avec de bonnes performances.

Les applications et services qui prennent en compte de manière dynamique le nombre de processeurs logiques disponibles s'adaptent automatiquement à la nouvelle situation. Les autres sont redémarrées, soit manuellement par l'utilisateur, soit en prévoyant dans le shell-script 122 des instructions pour les redémarrer.

D'une façon plus générale, dans le mode de réalisation illustré sur la figure 2, lorsque l'ordinateur 100 est configuré en mode hyper threading, les étapes 214 à 222 doivent être exécutées pour le configurer en mode mono threading simulé et lorsque l'ordinateur 100 est configuré en mode mono threading simulé, les étapes 228 à 234 doivent être exécutées pour le configurer en mode hyper threading.

Il apparaît clairement que l'invention est avantageuse en ce qu'elle permet d'exécuter, successivement et de façon efficace, deux programmes optimisés pour des modes différents, sans nécessiter de redémarrer l'ordinateur 100.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

En particulier, le système d'exploitation pourrait être conçu pour démarrer par défaut en mode mono threading simulé.

Une première façon de le faire pourrait être de modifier le système d'exploitation de sorte qu'à l'étape 212, ce dernier n'ajoute pas tous les processeurs logiques présents mais seulement un seul par cœur de calcul 116, par exemple en n'ajoutant que les processeurs logiques de la première moitié de la liste des processeurs présents.

Une seconde façon de le faire pourrait être de faire exécuter automatiquement le shell-script 122 par le système d'exploitation 120, par exemple avant que l'utilisateur n'ait la main, c'est-à-dire avant qu'il ne puisse lancer les programmes ou utiliser des fonctions du système d'exploitation.

Enfin, il est envisageable d'implémenter un nouveau service système dont la fonction serait d'activer le mode choisi. Celui-ci serait démarré ou arrêté soit manuellement, soit de façon automatique à chaque changement de niveau de fonctionnement du système (« runlevel » en anglais).

En outre, il est prévu selon l'invention que d'autres types de programmes qu'un shell-script puissent mettre en oeuvre les étapes 216 à 222 et/ou 230 à 234. En particulier, ces étapes pourraient être mises en oeuvre par l'exécution d'un programme binaire exécutable. Ainsi, ce programme constitue une commande permettant à l'utilisateur de mettre en œuvre les étapes précédentes. En outre, elles pourraient être mises en oeuvre par une fonction d'une librairie appelée par un programme, par exemple applicatif, via une interface applicative dite API (de l'anglais « Application Programming Interface »). Ainsi, il serait possible de concevoir un programme optimisé dans un des deux modes qui, au moment de son lancement appellerait cette fonction pour configurer l'ordinateur 100 dans le mode favorisant son exécution.

En outre, à l'étape 216, le shell-script 122 pourrait donner instruction de retirer de la liste des processeurs disponibles pour l'ordonnancement les processeurs de la première moitié de la liste de processeurs présents. Cependant, certains programmes qui considèrent que les premiers processeurs logiques sont toujours disponibles risqueraient de ne plus fonctionner.

En outre, le programme mettant en oeuvre les étapes 216 à 222 et/ou 230 à 243 pourrait ne pas utiliser la numérotation des processeurs logiques, mais à la place détecter lesquels correspondent à un second processeur logique d'un cœur en mode multi-threading pour les activer ou les désactiver. Cette détection peut par exemple être réalisée à partir des indications de la table MADT. Cette manière de faire est avantageuse par exemple lorsque la numérotation des processeurs logiques dans la table MADT ne suit pas la norme APIC, ou lorsque le système d'exploitation n'en tient pas compte.

Dans les revendications qui suivent, les termes utilisés ne doivent pas être interprétés comme limitant les revendications au mode de réalisation exposé dans la présente description.

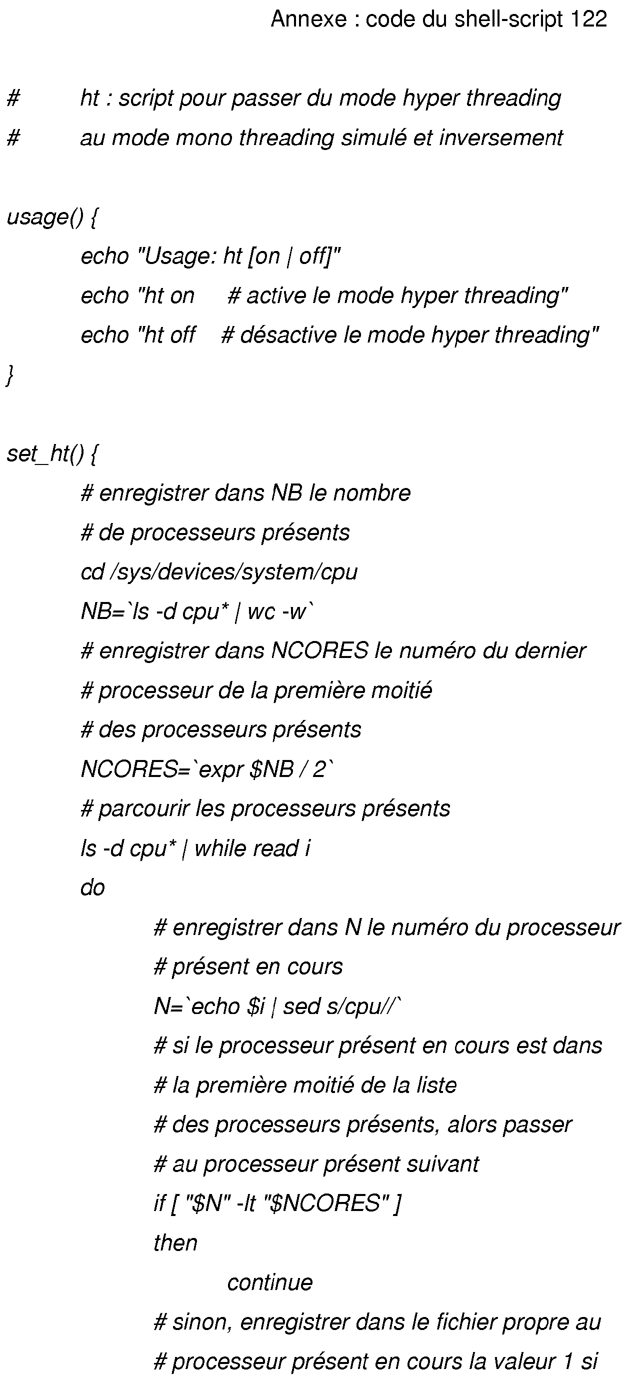

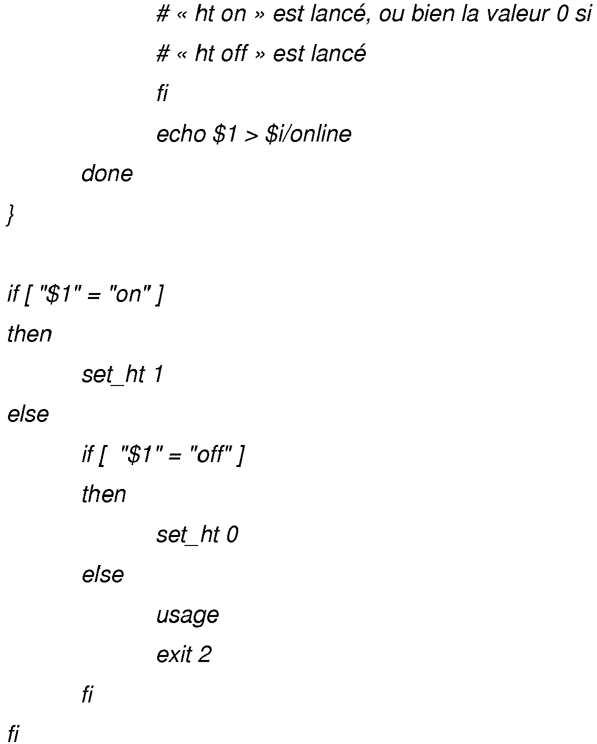

## Revendications

1. Procédé de configuration d'un système informatique (100) comportant au moins un cœur de calcul (116) pour exécuter des fils d'instructions, chaque cœur de calcul (116) étant apte à exécuter de manière entrelacée au moins deux fils d'instructions à la fois, un système BIOS (118) destiné à être exécuté au début du démarrage du système informatique (100) et un système d'exploitation (120), destiné à être exécuté par le système BIOS sur le système informatique (100), apte à fournir des fils d'instructions à chaque cœur de calcul (116), le procédé comportant :
- une exécution du système BIOS (118) incluant la création d'une première liste de processeurs logiques destinée à être lue par le système d'exploitation (120) lors de son exécution, cette liste comprenant au moins deux processeurs logiques pour chaque cœur de calcul (116) le plaçant ainsi dans un mode où il est configuré pour exécuter de manière entrelacée au moins deux fils d'instructions à la fois en présentant au système d'exploitation (120) en cours d'exécution autant de processeurs logiques que de fils d'instructions qu'il peut exécuter de manière entrelacée à la fois ;
- une exécution du système d'exploitation (120) incluant une lecture de la première liste pour organiser un ordonnancement des fils d'instructions ; et
- une configuration (216) du système d'exploitation (120) en cours d'exécution dans un mode dans lequel il fournit à chaque cœur de calcul (116) au plus un fil d'instructions à la fois ;
le procédé étant **caractérisé en ce que** :
- l'exécution du système d'exploitation (120) inclut la création, à partir de la première liste, d'une deuxième liste de processeurs logiques disponibles pour l'ordonnancement ; et
- la configuration (216) du système d'exploitation (120) comporte un retrait, dans la deuxième liste des processeurs logiques disponibles pour l'ordonnancement, de tous les processeurs logiques sauf un de chaque cœur de calcul (116).

2. Procédé de configuration d'un système informatique (100) selon la revendication 1, comportant en outre, alors que le système d'exploitation (120) en cours d'exécution est configuré dans le mode, dit premier mode, dans lequel il fournit à chaque cœur de calcul (116) au plus un fil d'instructions à la fois, une étape de configuration du système d'exploitation (120) en cours d'exécution dans un second mode, différent du premier mode, dans lequel il peut fournir à chaque cœur de calcul (116) plus d'un fil d'instructions à la fois.

3. Procédé de configuration d'un système informatique (100) selon la revendication 1 ou 2, dans lequel la configuration (216) du système d'exploitation (120) comporte une étape de transmission, au système d'exploitation (120) en cours d'exécution, d'une instruction de retirer de la liste des processeurs logiques disponibles pour l'ordonnancement, tous les processeurs logiques sauf un de chaque cœur de calcul (116).

4. Procédé de configuration d'un système informatique (100) selon les revendications 2 et 3, comportant en outre, pour configurer le système d'exploitation (120) en cours d'exécution afin qu'il fournisse à chaque cœur de calcul plus d'un fil d'instructions à la fois, une étape de transmission, au système d'exploitation (120) en cours d'exécution, d'une instruction d'ajouter dans la deuxième liste des processeurs logiques disponibles pour l'ordonnancement, tous les processeurs logiques qui en ont été retirés.

5. Procédé de configuration d'un système informatique selon l'une quelconque des revendications 1 à 4, dans lequel le système informatique ne comporte, comme cœur ou cœurs de calcul, qu'un ou des cœurs de calcul (116) aptes à exécuter de manière entrelacée au moins deux fils d'instructions à la fois.

6. Procédé de configuration d'un système informatique selon l'une quelconque des revendications 1 à 5, dans lequel chaque cœur de calcul (116) est apte à exécuter de manière entrelacée exactement deux fils d'instructions à la fois.

7. Programme d'ordinateur (122) téléchargeable depuis un réseau de communication et/ou enregistré sur un support lisible par ordinateur et/ou exécutable par un processeur, **caractérisé en ce qu'**il comprend des instructions pour l'exécution des étapes d'un procédé de configuration selon l'une quelconque des revendications 1 à 6, lorsque ledit programme est exécuté sur un ordinateur (100).

8. Programme d'ordinateur (122) selon la revendication 7, sous forme d'un shell-script.

9. Programme d'ordinateur selon la revendication 7, sous forme d'au moins une fonction d'une bibliothèque informatique destinée à être appelée par un autre programme.

10. Système informatique (100) comportant :
- au moins un cœur de calcul (116) pour exécuter des fils d'instructions, chaque cœur de calcul (116) étant apte à exécuter de manière entrelacée au moins deux fils d'instructions à la fois,
- une mémoire (110) dans laquelle est enregistré un système BIOS (118) destiné à être exécuté au début du démarrage du système informatique (100) pour, notamment, la création d'une première liste de processeurs logiques destinée à être lue par un système d'exploitation (120) lors de son exécution, cette liste comprenant au moins deux processeurs logiques pour chaque cœur de calcul (116) le plaçant ainsi dans un mode où il est configuré pour exécuter de manière entrelacée au moins deux fils d'instructions à la fois en présentant au système d'exploitation (120) en cours d'exécution autant de processeurs logiques que de fils d'instructions qu'il peut exécuter de manière entrelacée à la fois,
- une mémoire (112) de stockage de la première liste, et
- une mémoire (114) dans laquelle est enregistré un système d'exploitation qui, lorsque exécuté par le système BIOS (118) sur le système informatique (100), lit la première liste pour organiser un ordonnancement des fils d'instructions et est apte à fournir des fils d'instructions à chaque cœur de calcul (116),
**caractérisé en ce qu'**il comporte :
- une mémoire de stockage d'une deuxième liste de processeurs logiques disponibles pour l'ordonnancement, cette deuxième liste étant créée à partir de la première liste par le système d'exploitation (120) lors de son exécution,
- une mémoire (114) dans laquelle est enregistré un programme d'ordinateur (122) comprenant des instructions pour, lorsque exécuté par le système informatique (100) alors que le système d'exploitation (120) est en cours d'exécution par le système informatique (100), configurer le système d'exploitation (120) en cours d'exécution dans un mode dans lequel il fournit à chaque cœur de calcul (116) au plus un fil d'instructions à la fois en lui transmettant une instruction de retirer de la deuxième liste des processeurs logiques disponibles pour l'ordonnancement, tous les processeurs logiques sauf un de chaque cœur de calcul (116).

## Patentansprüche

1. Verfahren zum Konfigurieren eines IT-Systems (100), mindestens einen Berechnungskern (116) zum Ausführen der Anweisungs-Threads beinhaltend, wobei jeder Berechnungskern (116) imstande ist, verschlungen mindestens zwei Anweisungs-Threads auf einmal auszuführen, ein BIOS-System (118), das dazu bestimmt ist, zu Beginn des Hochfahrens des IT-Systems (100) ausgeführt zu werden, und ein Betriebssystem (120), das dazu bestimmt ist, durch das BIOS-System in dem IT-System (100) ausgeführt zu werden, das imstande ist, jedem Berechnungskern (116) Anweisungs-Threads bereitzustellen, wobei das Verfahren Folgendes beinhaltet:
- eine Ausführung des BIOS-Systems (118), die die Erstellung einer ersten Liste logischer Prozessoren beinhaltet, die dazu bestimmt ist, von dem Betriebssystem (120) bei dessen Ausführung gelesen zu werden, wobei diese Liste mindestens zwei logische Prozessoren für jeden Berechnungskern (116) umfasst, wodurch dieser in einen Modus platziert wird, in dem er konfiguriert ist, um verschlungen mindestens zwei Anweisungs-Threads auf einmal auszuführen, indem dem Betriebssystem (120) im Laufe der Ausführung so viele logische Prozessoren wie Anweisungs-Threads präsentiert werden, die es verschlungen auf einmal ausführen kann;
- eine Ausführung des Betriebssystems (120), die ein Lesen der ersten Liste beinhaltet, um eine Ablaufplanung der Anweisungs-Threads zu organisieren; und
- eine Konfiguration (216) des Betriebssystems (120) im Laufe der Ausführung in einem Modus, in dem es jedem Berechnungskern (116) mindestens ein Anweisungs-Thread auf einmal bereitstellt;
wobei das Verfahren **dadurch gekennzeichnet ist, dass**:
- die Ausführung des Betriebssystems (120) die Erstellung einer zweiten Liste logischer Prozessoren, die für die Ablaufplanung verfügbar sind, ausgehend von der ersten Liste beinhaltet; und
- die Konfiguration (216) des Betriebssystems (120) einen Abzug, aus der zweiten Liste logischer Prozessoren, die für die Ablaufplanung verfügbar sind, aller logischen Prozessoren außer einem von jedem Berechnungskern (116) beinhaltet.

2. Verfahren zum Konfigurieren eines IT-Systems (100) nach Anspruch 1, das weiter, während das Betriebssystem (120) im Laufe einer Ausführung in dem sogenannten ersten Modus konfiguriert ist, in dem es jedem Berechnungskern (116) höchstens ein Anweisungs-Thread auf einmal bereitstellt, einen Schritt der Konfiguration des Betriebssystems (120) im Laufe einer Ausführung in einem zweiten Modus, der sich vom ersten Modus unterscheidet, beinhaltet, in dem es jedem Berechnungskern (116) mehr als ein Anweisungs-Thread auf einmal bereitstellen kann.

3. Verfahren zum Konfigurieren eines IT-Systems (100) nach Anspruch 1 oder 2, wobei die Konfiguration (216) des Betriebssystems (120) einen Schritt des Übertragens an das Betriebssystem (120), im Laufe einer Ausführung, einer Anweisung zum Abziehen aus der Liste der zur Ablaufplanung verfügbaren logischen Prozessoren aller Prozessoren außer einem von jedem Berechnungskern (116) beinhaltet.

4. Verfahren zum Konfigurieren eines IT-Systems (100) nach den Ansprüchen 2 und 3, das weiter zum Konfigurieren des Betriebssystems (120) im Laufe einer Ausführung, um jedem Berechnungskern mehr als ein Anweisungs-Thread auf einmal bereitzustellen, einen Schritt des Übertragens an das Betriebssystem (120), im Laufe einer Ausführung, einer Anweisung zum Hinzufügen in die zweite Liste der zur Ablaufplanung verfügbaren logischen Prozessoren aller logischen Prozessoren, die daraus abgezogen worden sind, beinhaltet.

5. Verfahren zum Konfigurieren eines IT-Systems nach einem der Ansprüche 1 bis 4, wobei das IT-System als Berechnungskern oder -kerne nur einen Berechnungskern (116) oder -kerne beinhaltet, die imstande sind, verschlungen mindestens zwei Anweisungs-Threads auf einmal auszuführen.

6. Verfahren zum Konfigurieren eines IT-Systems nach einem der Ansprüche 1 bis 5, wobei der Berechnungskern (116) imstande ist, verschlungen genau zwei Anweisungs-Threads auf einmal auszuführen.

7. Computerprogramm (122), das aus einem Telekommunikationsnetz herunterladbar ist und/oder auf einem Medium gespeichert ist, das von einem Computer lesbar ist und/oder durch einen Prozessor ausführbar ist, **dadurch gekennzeichnet, dass** es Anweisungen zum Ausführen der Schritte eines Verfahrens zum Konfigurieren nach einem der Ansprüche 1 bis 6, umfasst, wenn das Programm auf einem Computer (100) ausgeführt wird.

8. Computerprogramm (122) nach Anspruch 7, in Form eines Shellskripts.

9. Computerprogramm nach Anspruch 7, in Form mindestens einer Funktion einer IT-Bibliothek, die dazu bestimmt ist, durch ein anderes Programm aufgerufen zu werden.

10. IT-System (100), Folgendes beinhaltend:
- mindestens einen Berechnungskern (116) zum Ausführen von Anweisungs-Threads, wobei jeder Berechnungskern (116) imstande ist, verschlungen mindestens zwei Anweisungs-Threads auf einmal auszuführen,
- einen Speicher (110), in dem ein BIOS-System (118) gespeichert ist, das dazu bestimmt ist, zu Beginn des Hochfahrens des IT-Systems (100) ausgeführt zu werden, insbesondere zur Erstellung einer ersten Liste logischer Prozessoren, die dazu bestimmt ist, von einem Betriebssystem (120) bei dessen Ausführung gelesen zu werden, wobei diese Liste mindestens zwei logische Prozessoren für jeden Berechnungskern (116) umfasst, wodurch dieser in einen Modus platziert wird, in dem er konfiguriert ist, um verschlungen mindestens zwei Anweisungs-Threads auf einmal auszuführen, indem dem Betriebssystem (120) im Laufe der Ausführung so viele logische Prozessoren wie Anweisungs-Threads präsentiert werden, die es verschlungen auf einmal ausführen kann,
- einen Speicher (112) zum Ablegen der ersten Liste, und
- einen Speicher (114), in dem ein Betriebssystem gespeichert ist, das, wenn es vom BIOS-System (118) in dem IT-System (100) ausgeführt wird, die erste Liste liest, um eine Ablaufplanung der Anweisungs-Threads zu organisieren, und imstande ist, jedem Berechnungskern (116) Anweisungs-Threads bereitzustellen,
**dadurch gekennzeichnet, dass** es Folgendes beinhaltet:
- einen Speicher zum Ablegen einer zweiten Liste zur Ablaufplanung verfügbarer logischer Prozessoren, wobei diese zweite Liste aus der ersten Liste durch das Betriebssystem (120) bei dessen Ausführung erstellt wird,
- einen Speicher (114), in dem ein Computerprogramm (122) gespeichert ist, das Anweisungen umfasst, um, wenn es von dem IT-System (100) ausgeführt wird, während das Betriebssystem (120) im Laufe einer Ausführung durch das IT-System (100) ist, das Betriebssystem (120) im Laufe einer Ausführung in einem Modus, in dem es jedem Berechnungskern (116) höchstens ein Anweisungs-Thread auf einmal bereitstellt, zu konfigurieren, indem es ihm eine Anweisung überträgt, um aus der zweiten Liste der für die Ablaufplanung verfügbaren logischen Prozessoren alle logischen Prozessoren außer einem von jedem Berechnungskern (116) abzuziehen.

## Claims

1. A method for configuring an IT system (100) comprising at least one computing core (116) for executing instruction threads, in which each computing core (116) is capable of executing at least two instruction threads at a time in an interlaced manner, a BIOS system (118) intended to be executed at the beginning of the start-up of the IT system (100) and an operating system (120), intended to be executed by the BIOS system on the IT system (100), capable of providing instruction threads to each computing core (116), wherein the method comprises:
- an execution of the BIOS system (118) including the creation of a first list of logic processors to be read by the operating system (120) during its execution, said list comprising at least two logic processors for each computing core (116) thereby placing it in a mode where it is configured to execute in an interlaced manner at least two instruction threads at a time by presenting to the operating system (120) during execution as many logic processors as instruction threads that it can execute in an interlaced manner at a time;
- an execution of the operating system (120) including a read of the first list to organize an instruction thread scheduling; and
- a configuration (216) of the operating system (120) being executed in a mode in which it provides, to each computing core (116), a maximum of one instruction thread at a time;
wherein the method is **characterized in that**:
- the execution of the operating system (120) includes creating, from the first list, a second list of logic processors available for scheduling; and
- the configuration (216) of the operating system (120) includes a removal, in the second list of logic processors available for scheduling, of all logic processors except one for each compute core (116).

2. The method for configuring an IT system (100) according to claim 1, further comprising, while the operating system (120) being executed is configured in the so-called first mode, in which it provides each computing core (116) with a maximum of one instruction thread at a time, a step of configuring the operating system (120) being executed in a second mode, different from the first mode, in which it can provide, to each computing core (116), more than one instruction thread at a time.

3. The method for configuring an IT system (100) according to claim 1 or 2, wherein the configuration (216) of the operating system (120) includes a step of transmitting, to the operating system (120) being executed, an instruction to remove all of the logic processes except for one of each computing core (116) from the list of logic processors available for scheduling.

4. The method for configuring an IT system (100) according to claims 2 and 3, further comprising, for configuring the operating system (120) being executed so that it provides each computing core with more than one instruction thread at a time, a step of transmitting, to the operating system (120) being executed, an instruction to add, to the second list of logic processors available for scheduling, all of the logic processors that were removed from it.

5. The method for configuring an IT system according to any one of claims 1 to 4, wherein the IT system comprises, as a computing core or cores, only one or more computing core(s) (116) capable of executing at least two instruction threads at a time in an interlaced manner.

6. The method for configuring an IT system according to any one of claims 1 to 5, wherein each computing core (116) is capable of executing exactly two instruction threads at a time in an interlaced manner.

7. A computer program (122) that can be downloaded from a communication network and/or recorded on a computer-readable medium and/or capable of being executed by a processor, **characterized in that** it includes instructions for executing steps of a configuration method according to any one of claims 1 to 6, when said program is executed on a computer (100).

8. The computer program (122) according to claim 7, in the form of a shell-script.

9. The computer program according to claim 7, in the form of at least one function of an IT library intended to be called by another program.

10. An IT system (100) comprising:
- at least one computing core (116) for executing instruction threads, in which each computing core (116) is capable of executing at least two instruction threads at a time in an interlaced manner,
- a memory (110) in which a BIOS system (118) is stored and intended to be executed at the beginning of the start-up of the IT system (100) for, notably, creating a first list of logic processors to be read by an operating system (120) during its execution, said list comprising at least two logic processors for each computing core (116) thereby placing it in a mode where it is configured to execute in an interlaced manner at least two instruction threads at a time by presenting to the operating system (120) during execution as many logic processors as instruction threads that it can execute in an interlaced manner at a time,
- a memory (112) for storing the first list, and
- a memory (114) in which an operating system is recorded, which, when executed by the BIOS system (118) on the IT system (100), reads the first list to organize an instruction thread scheduling and is capable of providing instruction threads to each computing core (116),
**characterized in that** it comprises:
- a memory for storing a second list of logic processors available for scheduling, said second list being created from the first list by the operating system (120) during its execution,
- a memory (114) in which a computer program (122) is recorded, including instructions for, when executed by the IT system (100) while the operating system (120) is being executed by the IT system (100), configuring the operating system (120) being executed in a mode in which it provides each computing core (116) with a maximum of one instruction thread at a time, by sending thereto an instruction for removing, from the second list of logic processors available for scheduling, all logic processors except one for each compute core (116).
